# EUROPEAN PATENT APPLICATION

(11) **EP 4 470 944 A1**
(43) Date of publication of application: **04.12.2024**
(21) Application number: 23745912.8
(22) Date of filing: 09.01.2023
(51) Int. Cl.: B65G 1/137, G06Q 10/08, B65G 1/04

(54) **MATERIAL WAREHOUSE EXIT METHOD AND APPARATUS, DEVICE, AND STORAGE MEDIUM**

(30) Priority: 26.01.2022 CN 202210095809
(71) Applicant: Hai Robotics Co., Ltd., Shenzhen, Guangdong 518000 (CN); Shenzhen Kubo Software Co., Ltd, Shenzhen, Guangdong 518100 (CN)
(72) Inventor: SONG, Tongjuan, Shenzhen, Guangdong 518000 (CN); ZHANG, Min, Shenzhen, Guangdong 518100 (CN)
(74) Representative: Gulde & Partner
(86) International application number: PCT/CN2023/071438
(87) International publication number: WO 2023/143029

(57) **Abstract**

Embodiments of the present disclosure provide a material outbound method and apparatus, a device, and a storage medium, which are applied to an intelligent warehousing system. The method includes: receiving first notification information, where the first notification information is used for indicating that picking shortage occurs during outbound of first materials corresponding to an outbound order; determining an outbound policy for the outbound order according to a picking shortage quantity of the first materials in the first notification information; and performing material outbound processing based on the outbound policy. According to the technical solutions in the embodiments of the present disclosure, the corresponding outbound policy can be determined in a targeted manner based on the specific situation of picking shortage, to ensure that material outbound can still be implemented even when picking shortage occurs, thereby effectively avoiding the problem that the order cannot be completed when picking shortage occurs, improving flexibility and the completion degree of order processing, and improving warehouse management efficiency.

## Description

### CROSS-REFERENCES

This application claims priority to Chinese Patent Application No. 202210095809.1, filed with the China National Intellectual Property Administration on January 26, 2022 and entitled "MATERIAL OUTBOUND METHOD AND APPARATUS, DEVICE, AND STORAGE MEDIUM", which is incorporated herein by reference in its entirety.

### TECHNICAL FIELD

The present disclosure relates to the field of intelligent warehousing technologies, and in particular, to a material outbound method and apparatus, a device, and a storage medium.

### BACKGROUND OF THE INVENTION

A warehousing system based on a warehousing robot uses an intelligent operating system. The intelligent operating system implements automated outbound of goods through system instructions and can run uninterruptedly for 24 hours a day, replacing manual management and operation and improving efficiency of warehousing, and therefore is widely used and favored.

Among existing warehousing systems, an intelligent warehousing system generates an outbound order, and a warehousing robot transports a material corresponding to the order to a workstation for outbound. In practice, however, picking shortage occurs. In other words, an actual quantity of outbound materials is less than a quantity in the outbound order. Consequently, an order demand cannot be satisfied, and it is difficult to complete the order.

### SUMMARY OF THE INVENTION

Embodiments of the present disclosure provide a material outbound method and apparatus, a device, and a storage medium, to resolve a problem that an order cannot be completed when picking shortage occurs.

According to a first aspect, an embodiment of the present disclosure provides a material outbound method. The material outbound method is applied to an intelligent warehousing system, and the material outbound method includes:
receiving first notification information, where the first notification information is used for indicating that picking shortage occurs during outbound of first materials corresponding to an outbound order;
determining an outbound policy for the outbound order according to a picking shortage quantity of the first materials in the first notification information; and
performing material outbound processing based on the outbound policy.

Optionally, the determining the outbound policy for the outbound order according to the picking shortage quantity of the first materials in the first notification information includes: determining an inventory quantity of the first materials in an inventory; determining the outbound policy based on the picking shortage quantity if the inventory quantity of the first materials is greater than the picking shortage quantity; and determining the outbound policy for the outbound order depending on whether the outbound order supports partial picking, if the inventory quantity of the first materials is less than the picking shortage quantity.

Optionally, the determining the outbound policy based on the picking shortage quantity if the inventory quantity of the first materials is greater than the picking shortage quantity includes: generating a first supplementary task based on the picking shortage quantity; and determining that the outbound policy is to perform outbound processing on all materials corresponding to the outbound order, when the first supplementary task and an outbound picking task for the outbound order except the picking shortage quantity corresponding to the first materials are completed.

Optionally, the determining the outbound policy for the outbound order depending on whether the outbound order supports partial picking, if the inventory quantity of the first materials is less than the picking shortage quantity includes: generating a second supplementary task based on the inventory quantity of the first materials; determining that the outbound order supports partial picking; and determining that the outbound policy is to perform outbound processing on outbound materials corresponding to the second supplementary task and picked materials, where the picked materials are materials corresponding to the outbound order except the picking shortage quantity corresponding to the first materials.

Optionally, before the determining that the outbound policy is to perform outbound processing on the outbound materials corresponding to the second supplementary task and the picked materials, the method further includes: determining a minimum outbound quantity corresponding to the outbound order; determining a total material picking quantity corresponding to the picked materials and the second supplementary task; and determining that the total material picking quantity is greater than or equal to the minimum outbound quantity.

Optionally, before the determining that the outbound policy is to perform outbound processing on the outbound materials corresponding to the second supplementary task and the picked materials, the method further includes: determining a minimum outbound quantity of the first materials in the outbound order; determining a total picking quantity of the picked materials and first materials in the second supplementary task; and determining that the total picking quantity is greater than or equal to the minimum outbound quantity of the first materials.

Optionally, after the determining the total material picking quantity corresponding to the picked materials and the second supplementary task, the method further includes: sending a replenishment order to an upstream interface based on the picking shortage quantity when the total material picking quantity is less than the minimum outbound quantity; and determining that the outbound policy is to perform outbound processing on all materials corresponding to the outbound order after receiving first materials corresponding to the replenishment order.

Optionally, the determining the outbound policy for the outbound order depending on whether the outbound order supports partial picking, if the inventory quantity of the first materials is less than the picking shortage quantity includes: generating a second supplementary task based on the inventory quantity of the first materials; determining that the outbound order does not support partial picking; sending a replenishment order to an upstream interface based on the picking shortage quantity; and determining that the outbound policy is to perform outbound processing on all materials corresponding to the outbound order after receiving first materials corresponding to the replenishment order.

Optionally, the method further includes: sending confirmation information confirming whether to cancel the outbound order to a customer, if replenishment is unachievable or replenishment time exceeds set duration for the outbound order.

Optionally, after the sending the confirmation information confirming whether to cancel the outbound order, the method further includes: determining feedback on the confirmation information from the customer in response to received second notification information, where the second notification information is used for indicating a selection made by the customer based on the confirmation information on whether to accept shipment of the order; determining that the outbound policy is to perform outbound processing on outbound materials corresponding to the second supplementary task and the picked materials, when the feedback from the customer is direct shipment; and determining that the outbound policy is to cancel the order and perform inbound processing on the picked materials corresponding to the order, when the feedback from the customer is disagreement to shipment.

Optionally, the determining the outbound policy for the outbound order according to the picking shortage quantity of the first materials in the first notification information includes: determining that the outbound order supports partial picking; and determining the outbound policy according to an inventory quantity of the first materials and picked materials, where the picked materials are materials corresponding to the outbound order except the picking shortage quantity corresponding to the first materials.

Optionally, the determining the outbound policy according to the inventory quantity and the picked materials includes: determining the inventory quantity of the first materials in the inventory; generating a third supplementary task based on the inventory quantity of the first materials when the inventory quantity is less than the picking shortage quantity; or generating a third supplementary task based on the picking shortage quantity when the inventory quantity is greater than the picking shortage quantity; and determining that the outbound policy is to perform outbound processing on outbound materials corresponding to the third supplementary task and the picked materials.

Optionally, the determining the outbound policy according to the inventory quantity of the first materials and the picked materials includes: determining latest outbound time corresponding to the outbound order; determining a time difference between a current moment and the latest outbound time; determining a quantity of to-be-replenished materials based on the time difference, where the quantity of to-be-replenished materials is less than or equal to the picking shortage quantity of the first materials; generating a third supplementary task based on the quantity of to-be-replenished materials and the inventory quantity of the first materials; and determining that the outbound policy is to perform outbound processing on outbound materials corresponding to the third supplementary task and the picked materials.

Optionally, before the determining the outbound policy according to the inventory quantity of the first materials and the picked materials, the method further includes:
determining a minimum outbound quantity corresponding to the outbound order; and
determining that a material quantity of the picked materials is greater than or equal to the minimum outbound quantity.

Optionally, the method further includes: generating a fourth supplementary task corresponding to a difference according to the difference between the material quantity of the picked materials and the minimum outbound quantity, if the material quantity of the picked materials is less than the minimum outbound quantity, where the fourth supplementary task is a task of reselecting first materials through inventory allocation for outbound; and performing the fourth supplementary task.

Optionally, the method further includes: if an inventory quantity of the first materials after the inventory allocation is less than the difference between the picked material quantity and the minimum outbound quantity, sending a replenishment order to an upstream interface based on the picking shortage quantity, and determining that the outbound policy is to perform outbound processing according to a material demand quantity corresponding to the outbound order after receiving materials corresponding to the replenishment order.

Optionally, the determining the outbound policy for the outbound order according to the picking shortage quantity of the first materials in the first notification information includes: performing inventory allocation for the first materials when the outbound order does not support partial picking; generating a fifth supplementary task based on the picking shortage quantity if an inventory quantity of the first materials in the inventory after the inventory allocation is greater than or equal to the picking shortage quantity; and determining that the outbound policy is to perform outbound processing on a material quantity corresponding to the fifth supplementary task and the picked materials.

Optionally, after the performing inventory allocation for the first materials, the method further includes: sending a replenishment order to an upstream interface based on the materials on which picking shortage occurs, if the inventory quantity of the first materials in the inventory after the inventory allocation is less than the picking shortage quantity; and determining that the outbound policy is to perform outbound processing on all materials corresponding to the outbound order after receiving materials corresponding to the replenishment order.

Optionally, the method further includes: sending confirmation information confirming whether to cancel the outbound order, if replenishment is unachievable or replenishment time exceeds set duration.

Optionally, after the sending the confirmation information confirming whether to cancel the outbound order, the method further includes: determining feedback on the confirmation information from a customer in response to received second notification information, where the second notification information is used for indicating a selection made by the customer based on the confirmation information on whether to accept shipment of the order; determining that the outbound policy is to perform outbound based on materials in the materials corresponding to the outbound order except the picking shortage quantity corresponding to the first materials, when the feedback from the customer is direct shipment; and determining that the outbound policy is to cancel the order and perform inbound processing on the picked materials corresponding to the order, when the feedback from the customer is disagreement to shipment.

Optionally, after the receiving first notification information, the method further includes: determining, according to the first notification message, a material code missing in picking of the outbound order; generating an inventorying task based on the material code, where the inventorying task is used for inventorying materials corresponding to the material code; and updating an inventory record of the materials corresponding to the material code based on a result of the inventorying task.

Optionally, after the receiving first notification information, the method further includes: determining all unfinished outbound orders that hit first materials in a container; and canceling hitting of the container by the unfinished outbound orders.

According to a second aspect, an embodiment of the present disclosure provides a material outbound apparatus. The material outbound apparatus is used in an intelligent warehousing system, and the material outbound apparatus includes:
a receiving module, configured to receive first notification information, where the first notification information is used for indicating that picking shortage occurs during outbound of first materials corresponding to an outbound order;
a determining module, configured to determine an outbound policy for the outbound order according to a picking shortage quantity of the first materials in the first notification information; and
a processing module, configured to perform material outbound processing based on the outbound policy.

Optionally, the determining module is further configured to: determine an inventory quantity of the first materials in an inventory; determine the outbound policy based on the picking shortage quantity if the inventory quantity of the first materials is greater than the picking shortage quantity; and determine the outbound policy for the outbound order depending on whether the outbound order supports partial picking, if the inventory quantity of the first materials is less than the picking shortage quantity.

Optionally, the determining module is further configured to: if the inventory quantity of the first materials is greater than the picking shortage quantity, generate a first supplementary task based on the picking shortage quantity; and determine that the outbound policy is to perform outbound processing on all materials corresponding to the outbound order, when the first supplementary task and an outbound picking task for the outbound order except the picking shortage quantity corresponding to the first materials are completed.

Optionally, the determining module is further configured to: if the inventory quantity of the first materials is less than the picking shortage quantity, generate a second supplementary task based on the inventory quantity of the first materials; determine that the outbound order supports partial picking; and determine that the outbound policy is to perform outbound processing on outbound materials corresponding to the second supplementary task and picked materials, where the picked materials are materials corresponding to the outbound order except the picking shortage quantity corresponding to the first materials.

Optionally, the determining module is further configured to: before determining that the outbound policy is to perform outbound processing on the outbound materials corresponding to the second supplementary task and the picked materials, determine a minimum outbound quantity corresponding to the outbound order; determine a total material picking quantity corresponding to the picked materials and the second supplementary task; and determine that the total material picking quantity is greater than or equal to the minimum outbound quantity.

Optionally, the determining module is further configured to: before determining that the outbound policy is to perform outbound processing on the outbound materials corresponding to the second supplementary task and the picked materials, determine a minimum outbound quantity of the first materials in the outbound order; determine a total picking quantity of the picked materials and first materials in the second supplementary task; and determine that the total picking quantity is greater than or equal to the minimum outbound quantity of the first materials.

Optionally, the determining module is further configured to: after determining the total material picking quantity corresponding to the picked materials and the second supplementary task, send a replenishment order to an upstream interface based on the picking shortage quantity when the total material picking quantity is less than the minimum outbound quantity; and determine that the outbound policy is to perform outbound processing on all materials corresponding to the outbound order after receiving first materials corresponding to the replenishment order.

Optionally, the determining module is further configured to: if the inventory quantity of the first materials is less than the picking shortage quantity, generate a second supplementary task based on the inventory quantity of the first materials; determine that the outbound order does not support partial picking; send a replenishment order to an upstream interface based on the picking shortage quantity; and determine that the outbound policy is to perform outbound processing on all materials corresponding to the outbound order after receiving first materials corresponding to the replenishment order.

Optionally, the determining module is further configured to: send confirmation information confirming whether to cancel the outbound order to a customer, if replenishment is unachievable or replenishment time exceeds set duration for the outbound order.

Optionally, the determining module is further configured to: after sending the confirmation information confirming whether to cancel the outbound order, determine feedback on the confirmation information from the customer in response to received second notification information, where the second notification information is used for indicating a selection made by the customer based on the confirmation information on whether to accept shipment of the order; determine that the outbound policy is to perform outbound processing on outbound materials corresponding to the second supplementary task and the picked materials, when the feedback from the customer is direct shipment; and determine that the outbound policy is to cancel the order and perform inbound processing on the picked materials corresponding to the order, when the feedback from the customer is disagreement to shipment.

Optionally, the determining module is further configured to: determine that the outbound order supports partial picking; and determine the outbound policy according to an inventory quantity of the first materials and picked materials, where the picked materials are materials corresponding to the outbound order except the picking shortage quantity corresponding to the first materials.

Optionally, the determining module is further configured to: determine the inventory quantity of the first materials in the inventory; generate a third supplementary task based on the inventory quantity of the first materials when the inventory quantity is less than the picking shortage quantity; or generate a third supplementary task based on the picking shortage quantity when the inventory quantity is greater than the picking shortage quantity; and determine that the outbound policy is to perform outbound processing on outbound materials corresponding to the third supplementary task and the picked materials.

Optionally, the determining module is further configured to: determine latest outbound time corresponding to the outbound order; determine a time difference between a current moment and the latest outbound time; determine a quantity of to-be-replenished materials based on the time difference, where the quantity of to-be-replenished materials is less than or equal to the picking shortage quantity of the first materials; generate a third supplementary task based on the quantity of to-be-replenished materials and the inventory quantity of the first materials; and determine that the outbound policy is to perform outbound processing on outbound materials corresponding to the third supplementary task and the picked materials.

Optionally, the determining module is further configured to: before determining the outbound policy according to the inventory quantity of the first materials and the picked materials, determine a minimum outbound quantity corresponding to the outbound order; and determine that a material quantity of the picked materials is greater than or equal to the minimum outbound quantity.

Optionally, the determining module is further configured to: generate a fourth supplementary task corresponding to a difference according to the difference between the material quantity of the picked materials and the minimum outbound quantity, if the material quantity of the picked materials is less than the minimum outbound quantity, where the fourth supplementary task is a task of reselecting first materials through inventory allocation for outbound; and performing the fourth supplementary task.

Optionally, the determining module is further configured to: if an inventory quantity of the first materials after the inventory allocation is less than the difference between the picked material quantity and the minimum outbound quantity, send a replenishment order to an upstream interface based on the picking shortage quantity, and determine that the outbound policy is to perform outbound processing according to a material demand quantity corresponding to the outbound order after receiving materials corresponding to the replenishment order.

Optionally, the determining module is further configured to: perform inventory allocation for the first materials when the outbound order does not support partial picking; generate a fifth supplementary task based on the picking shortage quantity if an inventory quantity of the first materials in the inventory after the inventory allocation is greater than or equal to the picking shortage quantity; and determine that the outbound policy is to perform outbound processing on a material quantity corresponding to the fifth supplementary task and the picked materials.

Optionally, the determining module is further configured to: after performing inventory allocation for the first materials, send a replenishment order to an upstream interface based on the materials on which picking shortage occurs, if the inventory quantity of the first materials in the inventory after the inventory allocation is less than the picking shortage quantity; and determine that the outbound policy is to perform outbound processing on all materials corresponding to the outbound order after receiving materials corresponding to the replenishment order.

Optionally, the determining module is further configured to: send confirmation information confirming whether to cancel the outbound order, if replenishment is unachievable or replenishment time exceeds set duration.

Optionally, the determining module is further configured to: after the sending the confirmation information confirming whether to cancel the outbound order, determine feedback on the confirmation information from a customer in response to received second notification information, where the second notification information is used for indicating a selection made by the customer based on the confirmation information on whether to accept shipment of the order; determine that the outbound policy is to perform outbound based on materials in the materials corresponding to the outbound order except the picking shortage quantity corresponding to the first materials, when the feedback from the customer is direct shipment; and determine that the outbound policy is to cancel the order and perform inbound processing on the picked materials corresponding to the order, when the feedback from the customer is disagreement to shipment.

Optionally, the determining module is further configured to: after receiving first notification information, determine, according to the first notification message, a material code missing in picking of the outbound order; generate an inventorying task based on the material code, where the inventorying task is used for inventorying materials corresponding to the material code; and update an inventory record of the materials corresponding to the material code based on a result of the inventorying task.

Optionally, the determining module is further configured to: after receiving first notification information, determine all unfinished outbound orders that hit first materials in a container; and cancel hitting of the container by the unfinished outbound orders.

According to a third aspect, an embodiment of the present disclosure further provides a control device, where the control device includes:
at least one processor; and
a memory communicatively connected to the at least one processor, where
the memory stores instructions executable by the at least one processor, and the instructions are executed by the at least one processor, to cause the control device to perform the material outbound method according to the first aspect of the present disclosure.

According to a fourth aspect, an embodiment of the present disclosure further provides a computer-readable storage medium, where the computer-readable storage medium stores computer executable instructions, and the computer executable instructions, when executed by a processor, are configured for performing the material outbound method according to the first aspect of the present disclosure.

According to a fifth aspect, an embodiment of the present disclosure further provides a computer program product, where the computer program product includes computer executable instructions, and the computer executable instructions, when executed by a processor, are configured for performing the material outbound method according to the first aspect of the present disclosure.

According to the material outbound method and apparatus, the device, the system, and the storage medium provided in the embodiments of the present disclosure, the first notification information indicating that picking shortage occurs during outbound of the first materials corresponding to the outbound order is received, and the outbound policy for the outbound order is determined according to the picking shortage quantity of the first materials in the first notification information, so that material outbound processing is performed based on the outbound policy. Therefore, the corresponding outbound policy can be determined in a targeted manner based on the specific situation of picking shortage, to ensure that material outbound can still be implemented even when picking shortage occurs, thereby effectively avoiding the problem that the order cannot be completed when picking shortage occurs, improving flexibility and the completion degree of order processing, and improving warehouse management efficiency.

### BRIEF DESCRIPTION OF DRAWINGS

The accompanying drawings herein, which are incorporated in the specification as a part of the specification, show embodiments in accordance with the present disclosure, and together with the specification are used to explain the principle of the present disclosure.
FIG. 1 is a diagram of an application scenario of a material outbound method according to an embodiment of the present disclosure;
FIG. 2 is a flowchart of a material outbound method according to an embodiment of the present disclosure;
FIG. 3 is a flowchart of a material outbound method according to another embodiment of the present disclosure;
FIG. 4 is a flowchart of a material outbound method according to another embodiment of the present disclosure;
FIG. 5 is a flowchart of a material outbound method according to another embodiment of the present disclosure;
FIG. 6 is a flowchart of a material outbound method according to another embodiment of the present disclosure;
FIG. 7 is a flowchart of a material outbound method according to another embodiment of the present disclosure;
FIG. 8 is a schematic structural diagram of a material outbound apparatus according to another embodiment of the present disclosure;
FIG. 9 is a schematic structural diagram of a control device according to another embodiment of the present disclosure.

The foregoing accompanying drawings illustrate specific embodiments of the present disclosure, and more detailed description is provided below. The accompanying drawings and text descriptions are not intended to limit the scope of the idea of the present disclosure in any manner, but are intended to describe the concept of the present disclosure to a person skilled in the art with reference to particular embodiments.

### DETAILED DESCRIPTION

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. The implementations described in the following exemplary embodiments do not represent all implementations that are consistent with the present disclosure. On the contrary, the implementations are merely examples of apparatuses and methods that are described in detail in the appended claims and that are consistent with some aspects of the present disclosure.

The following describes the technical solutions of the present disclosure and how to resolve the foregoing technical problems according to the technical solutions of the present disclosure in detail by using specific embodiments. The following several specific embodiments may be combined with each other, and a same or similar concept or process may not be described repeatedly in some embodiments. The following describes the embodiments of the present disclosure with reference to accompanying drawings.

When an intelligent warehousing system performs material outbound, a container needs to be transported from a warehouse inventory to a workstation, target goods corresponding to an order are selected from the container at the workstation, and then outbound processing is performed on the goods. When it is found during picking at the workstation that an actual quantity of target goods in the container is less than a quantity of target goods that need to be picked from the container, and/or that the actual quantity of target goods in the container is less than a quantity of target goods in the container stored by the system, it is considered that picking shortage occurs. In this case, in the related art, outbound of the order is usually temporarily canceled or manually processed by dedicated management personnel. Consequently, demand of the outbound order cannot be satisfied, the processing efficiency is low, and usually the order cannot be completed.

To resolve the problem, the embodiments of the present disclosure provide a material outbound method, to automatically determine a corresponding outbound policy according to a picking shortage quantity of materials, and perform automatic processing based on the outbound policy, so that the intelligent warehousing system can quickly cope with the scenario of picking shortage, and effectively resolve the problem that an order cannot be completed.

An application scenario involved in the embodiments of the present disclosure is described below.

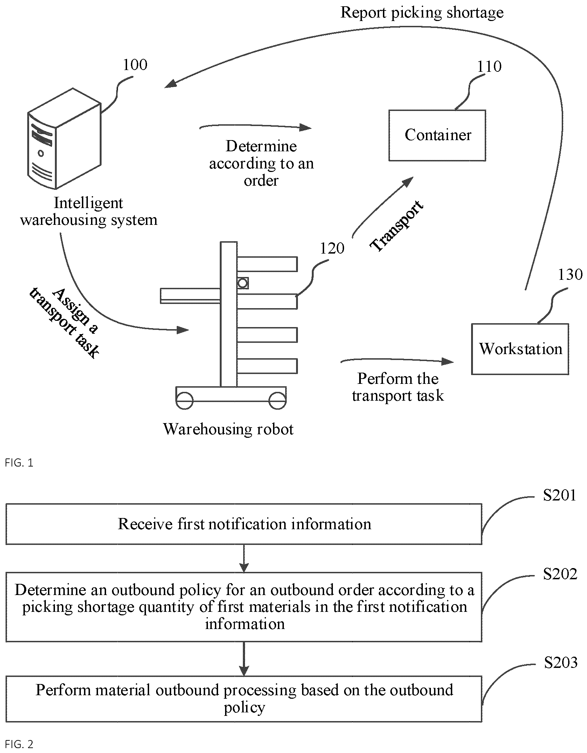

FIG. 1 is a diagram of an application scenario of a material outbound method according to an embodiment of the present disclosure. As shown in FIG. 1, in a material outbound process, an intelligent warehousing system 100 determines, according to an order, a container 110 that needs to be picked for outbound, and assigns a transport task to a warehousing robot 120. The warehousing robot 120 transports the container 110 from an inventory to a workstation 130 for picking and outbound. When picking shortage occurs during picking from the container 110 at the workstation 130, the workstation reports the picking shortage situation to the intelligent warehousing system 100, to re-determine an outbound policy to complete the material outbound processing.

It should be noted that in the scenario shown in FIG. 1, one container, one warehousing robot, one inventory, and one workstation are used as an example for description, but the present disclosure is not limited thereto. In other words, quantities of containers, warehousing robots, inventories, and workstations may be arbitrary.

The material outbound method provided in the present disclosure is described in detail below through detailed embodiments.

FIG. 2 is a flowchart of a material outbound method according to an embodiment of the present disclosure. The material outbound method is applied to an intelligent warehousing system. As shown in FIG. 2, the material outbound method according to this embodiment of this application includes the following steps:

Step S201: receiving first notification information.

The first notification information is used for indicating that picking shortage occurs during outbound of first materials corresponding to an outbound order. For example, a cause of the picking shortage may be that a quantity of first materials recorded in the intelligent warehousing system is not updated in a timely manner after first materials in a container are manually picked, or the quantity of the first materials in the container is mistakenly inventoried when recorded into the intelligent warehousing system, or the quantity of the first materials in the container is not updated in a timely manner into the intelligent warehousing system after being inventoried. As a result, the quantity of the first materials stored in the container does not match an actual quantity of the first materials, and so on.

Specifically, occurrence of picking shortage may be determined manually by staff at the workstation and then the first notification information is generated by a workstation device, or the first notification information may be generated automatically by the workstation device.

For example, after receiving an outbound order from the intelligent warehousing system, the workstation device determines a category and a quantity of materials to be picked out of each container for outbound. During picking from the container at the workstation, when the workstation device receives that a picking quantity of materials of a specific category in the container is less than the quantity of materials of the specific category determined according to the order or receives a message indicating that picking of a material is not completed, the workstation device may automatically generate the first notification information.

In some embodiments, the first notification information includes information about the workstation at which picking shortage occurs, the corresponding order on which picking shortage occurs, and the specific category and quantity of the first materials on which picking shortage occurs, for the intelligent warehousing system to determine the corresponding outbound policy in a targeted manner.

Further, the first materials may be materials of one category, or may be materials of various categories. For example, picking shortage occurs on three or more categories of materials simultaneously. Picking shortage quantities of different first materials may be the same or different.

Step S202: determining an outbound policy for the outbound order according to a picking shortage quantity of the first materials in the first notification information.

Specifically, the outbound policy is a processing policy automatically determined by the intelligent warehousing system based on a preset rule and the picking shortage quantity in the first notification information.

The outbound policy may be a task automatically generated and completed by the intelligent warehousing system, for example, a container outbound transport task automatically sent to a warehousing robot after a container corresponding to the outbound order is reselected, or an automatically generated replenishment order sent to a supplier; or may be information about a task that needs to be completed manually sent to a corresponding device of staff, for example, inventorying materials on which picking shortage occurs.

Step S203: performing material outbound processing based on the outbound policy.

Specifically, when the outbound policy is a task that can be automatically performed by the intelligent warehousing system, the intelligent warehousing system automatically performs the task determined according to the outbound policy, for example, sending a replenishment order to a third party.

When the outbound policy is a task that needs to be completed by the workstation or a third party (for example, a supplier) (where for example, the outbound policy is to perform outbound on both picked materials other than the picking shortage quantity and first materials replenished by the third party), the intelligent warehousing system sends corresponding task information to the workstation or the third party, and determines that the material outbound processing is completed after receiving feedback information indicating that corresponding content of the task information is completed.

For example, when the outbound policy is that a supplier is required for replenishment and outbound needs to be performed after the replenishment is completed, the intelligent warehousing system generates and sends a replenishment order to the supplier based on the outbound policy, and upon receiving a feedback message indicating that the replenishment order is completed, generates a transport task based on materials corresponding to the replenishment order (or corresponding to a picking shortage quantity). The warehousing robot transports the materials to the workstation. Task information indicating to perform supplementary picking and perform outbound on all materials corresponding to the outbound order after the supplementary picking is then sent to the workstation. When the intelligent warehousing system receives a completion feedback of the corresponding task information sent by the workstation, it can be determined that the material outbound processing is completed.

According to the material outbound method provided in this embodiment of the present disclosure, the first notification information indicating that picking shortage occurs during outbound of the first materials corresponding to the outbound order is received, and the outbound policy for the outbound order is determined according to the picking shortage quantity of the first materials in the first notification information, so that material outbound processing is performed based on the outbound policy. Therefore, the corresponding outbound policy can be determined in a targeted manner based on the specific situation of picking shortage, to ensure that material outbound can still be implemented even when picking shortage occurs, thereby effectively avoiding the problem that the order cannot be completed when picking shortage occurs, improving warehouse management efficiency.

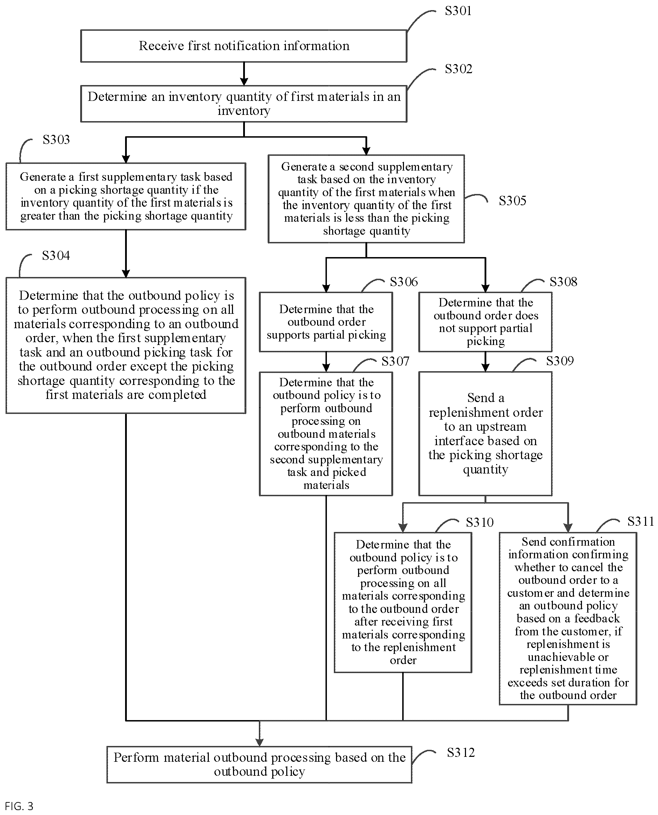

FIG. 3 is a flowchart of a material outbound method according to another embodiment of the present disclosure. The material outbound method provided in this embodiment of the present disclosure is further refined based on the embodiment shown in FIG. 2. As shown in FIG. 3, the material outbound method according to this embodiment of this application includes the following steps:
Step S301: receiving first notification information.

The first notification information is used for indicating that picking shortage occurs during outbound of first materials corresponding to an outbound order.

This step has the same content as step S201 in the corresponding embodiment of FIG. 2, and details are not described herein again.

Step S302: determining an inventory quantity of the first materials in an inventory.

The inventory quantity of the first materials in the inventory is used for representing a material quantity of first materials that are still in the inventory and not hit by other orders other than a recorded inventory quantity of first materials in a currently picked container, including a material quantity of first materials in a container placed on an inventory unit in an inventory area, and not including a material quantity of first materials in a container that have been obtained by the warehousing robot, that are being transported to the workstation, or that are being picked at the workstation.

Further, the first materials may be materials of one category, or may be materials of more than one category. For example, when picking shortage occurs simultaneously on screws of three different types in a container corresponding to an order, the first materials are the screws of the three types on which picking shortage occurs.

In some embodiments, when determining that material picking shortage occurs at the workstation, the intelligent warehousing system first reallocates first materials in the inventory. When there are first materials on which picking shortage occurs in the inventory, the intelligent warehousing system may hit the corresponding first materials based on the picking shortage quantity and generate a supplementary outbound task. The first materials hit in the inventory may be transported by the warehousing robot to the workstation to be picked, for outbound with the picked materials corresponding to the outbound order. Therefore, the picking shortage quantity can be directly compensated, ensuring quick completion of the order.

Further, during reallocation of the first materials in the inventory, the inventory quantity of the first materials in the inventory needs to be determined first, to determine a further processing policy based on the inventory quantity.

Step S303: generating a first supplementary task based on the picking shortage quantity if the inventory quantity of the first materials is greater than the picking shortage quantity.

Specifically, when the inventory quantity of the first materials is greater than the picking shortage quantity, it indicates that the first materials that can be called in the inventory can make up the picking shortage quantity of the first materials on which picking shortage occurs. Therefore, making up the picking shortage quantity of the order by using the inventory directly ensures quick completion of the order.

The first supplementary task includes: The intelligent warehousing system determines a container satisfying the picking shortage quantity in the inventory according to the picking shortage quantity of the first materials, and sends a transport task for the container to the warehousing robot. The warehousing robot transports the container to a corresponding workstation, and the workstation performs picking on the container to select the picking shortage quantity of first materials.

Step S304: determining that the outbound policy is to perform outbound processing on all materials corresponding to the outbound order, when the first supplementary task and an outbound picking task for the outbound order except the picking shortage quantity corresponding to the first materials are completed.

In some embodiments, when picking shortage occurs on the first materials of the corresponding order at the workstation and the inventory quantity of the first materials in the inventory can make up the picking shortage quantity, the workstation continues to perform picking on the container corresponding to the order on which material picking shortage occurs, until all outbound picking tasks other than the picking shortage quantity corresponding to the first materials are performed.

Meanwhile, the workstation corresponding to the first supplementary task picks materials involved in the first supplementary task. In this case, the outbound policy is to perform outbound on both the materials picked according to the first supplementary task and materials involved in the outbound picking tasks other than the picking shortage quantity corresponding to the outbound order, that is, complete direct outbound for the order on which material picking shortage occurs.

Further, the picking shortage quantity corresponding to the first materials in the outbound order is made up by directly generating the first supplementary task by the intelligent warehousing system. Therefore, the completion of the outbound order can be efficiently guaranteed without affecting the order outbound efficiency, thereby improving warehouse management efficiency.

For example, when picking and outbound for an outbound order A is performed by a workstation K1, N toys 1 need to be picked out of a container 1 corresponding to the outbound order A according to a task assigned by the intelligent warehousing system. However, during picking from the container 1, it is found that a quantity of toys 1 in the container is less than N. Therefore, the foregoing first notification information is reported to the intelligent warehousing system through the workstation K1. The intelligent warehousing system finds, by querying the inventory, that there are 50 toys 1 in the inventory, generates the first supplementary task (including reallocating a container v1 including ten toys 1 to the outbound order according to a picking shortage quantity of toys 1 in the first notification information, assigning a task of transporting the container v1 to the workstation K1 to the warehousing robot, and controlling the workstation K1 to pick eight toys 1 according to the picking shortage quantity from the container v1) according to the first notification information, and then performs outbound processing on the eight toys 1 together with other materials corresponding to the outbound order A (namely, all materials corresponding to the outbound order A).

Step S305: generating a second supplementary task based on the inventory quantity of the first materials when the inventory quantity of the first materials is less than the picking shortage quantity.

This step is an option in parallel with step S303, and depending on specific scenarios in the embodiments, steps S303 and S304 may be performed or steps S305 to S307 may be performed.

Specifically, when the intelligent warehousing system determines, by re-determining the inventory, that the inventory quantity of the first materials is insufficient to make up the picking shortage quantity, the demand of the outbound order may not be satisfied. In this case, if the outbound order allows outbound of some materials in the order, outbound may be directly performed for the outbound order after replenishment is performed based on the inventory quantity of the first materials in the inventory, or outbound is directly performed on the picked materials (the corresponding other material quantities in the outbound order except the picking shortage quantity) corresponding to the outbound order. If the outbound order does not allow outbound of some materials, replenishment needs to be performed by an upstream system, for example, a supplier or a stacking area, or a customer corresponding to the outbound order needs to be consulted whether the outbound order needs to be canceled.

Further, the second supplementary task includes: The intelligent warehousing system hits the first materials (namely, all the first materials in the inventory) corresponding to the inventory quantity in the inventory. The intelligent warehousing system sends a transport task to the warehousing robot. The warehousing robot transports the first materials corresponding to the inventory quantity to the workstation at which picking shortage occurs or another workstation at which the outbound order on which picking shortage occurs, and performs picking.

For example, picking shortage occurs on an outbound order A with eight materials S being short. However, the intelligent warehousing system finds that an inventory quantity of materials S in the inventory is only five. In this case, the intelligent warehousing system first hits the five materials S, and then generates a corresponding second supplementary task.

Step S306: determining that the outbound order supports partial picking.

Specifically, partial picking is an option set when the outbound order is released, to indicate whether the outbound order allows outbound of some materials in the outbound order. If the outbound order supports partial picking, it indicate that the outbound order allows outbound of some materials. For example, an outbound order corresponding to a production line generally can support partial picking because same materials in the outbound order are consumed continuously rather than at once. However, an outbound order corresponding to a single package or scattered packages, for example, an outbound order including different kinds of accessories of a computer, generally does not support partial picking. This is because a customer need (computer assembly) cannot be satisfied without outbound of all materials in the outbound order.

Further, when receiving the outbound order, the intelligent warehousing system can determine whether the outbound order supports partial picking, and based on this, directly determine a processing policy for picking shortage when picking shortage occurs on materials corresponding to the outbound order.

In some embodiments, when an outbound order is not preset as to support partial picking or not, the intelligent warehousing system may determine, according to a preset rule based on a parameter or an order type of the outbound order, whether the outbound order supports partial picking, and configure a default value for the outbound order. If an order is from a customer, for example, a factory or a production line, the order supports partial picking. If an order is from an individual user, the order does not support partial picking. Alternatively, if an order is a building material order, the order generally includes a large number of materials of a same category, and therefore supports partial picking by default. Alternatively, whether the outbound order supports partial picking may be determined according to requirements in a historical order of the same customer.

In some embodiments, when the outbound order is not preset as to support partial picking or not, the intelligent warehousing system may receive a configuration parameter temporarily entered by management personnel, and determine whether the outbound order supports partial picking based on the temporarily entered configuration parameter. After an outbound order not configured as to support partial picking or not is received, if the management personnel receive a temporary notification from a customer requiring to set the outbound order to not support partial picking, a configuration parameter of the outbound order may be adjusted according to customer needs.

In some embodiments, after reallocating the inventory quantity of the first materials in the inventory, the intelligent warehousing system determines whether the outbound order supports partial picking; and if the outbound order supports partial picking, generates a supplementary task for supplementary outbound of first materials based on the allocation, and sends the supplementary task to the warehousing robot for execution. Alternatively, whether the outbound order supports partial picking may be determined after inventory allocation and generation of the corresponding supplementary task; and if the outbound order supports partial picking, the supplementary task is sent to the warehousing robot for execution.

Step S307: determining that the outbound policy is to perform outbound processing on outbound materials corresponding to the second supplementary task and the picked materials.

The picked materials are materials corresponding to the outbound order except the picking shortage quantity corresponding to the first materials.

Specifically, after the second supplementary task is completed (that is, after the first materials corresponding to the second supplementary task have been picked), the intelligent warehousing system sends an outbound task to the workstation based on the outbound policy, to perform outbound processing on both the outbound materials picked according to the second supplementary task and the picked materials on which picking shortage does not occur in the outbound order. In this way, when the outbound order supports partial picking, outbound is performed on the materials allowing direct outbound in the inventory first, to satisfying customer needs in a timely manner.

In some embodiments, in addition to performing outbound processing on the outbound materials corresponding to the second supplementary task and the picked materials, the outbound policy further includes sending a replenishment request to an upstream interface and performing supplementary outbound on the materials on which outbound has not been performed in the outbound order after receiving the replenished first materials.

Step S308: determining that the outbound order does not support partial picking.

In some embodiments, the outbound order is set to not support partial picking. In this case, replenishment can only be performed through the upstream interface; otherwise outbound processing cannot be performed.

In some embodiments, after generating the supplementary task, the intelligent warehousing system determines whether the order supports partial picking; and if the order does not support partial picking, sends the second supplementary task to the warehousing robot for execution, and then sends the replenishment request synchronously to the upstream interface (for example, a communication interface of an upstream system such as a supplier or a stacking area) for automated replenishment.

Step S309: sending a replenishment order to an upstream interface based on the picking shortage quantity.

The replenishment order is an order automatically generated by the intelligent warehousing system and corresponding to the first materials on which picking shortage occurs.

When the quantity of the first materials in the inventory is insufficient to make up the picking shortage quantity, the replenishment order needs to be sent to the upstream interface to complete outbound of all the materials in the outbound order. According to a configuration of the intelligent warehousing system, the replenishment order corresponding to the picking shortage quantity or corresponding to a difference between the picking shortage quantity and the inventory quantity is sent to the upstream interface.

Further, inbound is first performed on the first materials corresponding to the replenishment order through the workstation, information about the inbound materials is recorded by the intelligent warehousing system, and a corresponding supplementary outbound task is generated by the intelligent warehousing system based on the inbound first materials, to facilitate management of the warehousing system.

In some embodiments, the material quantity corresponding to the replenishment order is the picking shortage quantity. If a total material picking quantity is less than a demand quantity of the outbound order, the intelligent warehousing system sends a replenishment order to the upstream interface based on the quantity of the first materials on which picking shortage occurs. For example, there are 50 wrenches recorded and stored in a container A, an outbound order requires ten wrenches to be picked out of the container A, but only two wrenches are actually acquired. In this case, the replenishment order may require replenishment of eight wrenches.

In some embodiments, the material quantity corresponding to the replenishment order is the difference between the picking shortage quantity and the inventory quantity. After receiving the first notification information indicating that picking shortage occurs, the intelligent warehousing system generates the corresponding supplementary task based on the quantity of the first materials in the inventory, and after receiving the materials replenished according to the replenishment order, generates the corresponding supplementary outbound task based on the difference between the picking shortage quantity and the quantity of the first materials in the inventory. Therefore, the replenishment order sent to the upstream interface in this case only needs to satisfy the difference between the picking shortage quantity and the quantity of the first materials in the inventory. In the foregoing example, if there are five wrenches in the inventory, the replenishment order may alternatively require replenishment of three wrenches, to satisfy the need to make up the outbound order on which picking shortage occurs.

In some embodiments, the material quantity corresponding to the replenishment order is a sum of the difference between the picking shortage quantity and the inventory quantity and a quantity of first materials included in a to-be-processed outbound order of the intelligent warehousing system. In this case, the intelligent warehousing system has an outbound order that has been received but has not been processed in addition to the outbound order currently being executed. This portion of materials may also be included in the replenishment order to avoid that the subsequent outbound order cannot be completed due to a shortage of the first materials. In the foregoing example, if ten wrenches are needed in the outbound order that has not been processed, the replenishment order may alternatively require replenishment of 13 wrenches (including three wrenches that is the difference between the picking shortage quantity and the inventory quantity, and ten wrenches needed for the outbound order that has been processed), to satisfy the demand of the subsequent order.

Step S310: determining that the outbound policy is to perform outbound processing on all materials corresponding to the outbound order after receiving first materials corresponding to the replenishment order.

Specifically, after receiving and performing inbound on the first materials in the replenishment order, the intelligent warehousing system generates and sends a transport task based on the first materials to the warehousing robot for execution. The workstation then performs picking on the first materials, and performs outbound on the picked first materials, the first materials included in the second supplementary task, and the picked materials, thereby completing the outbound processing on all the materials in the outbound order.

Step S311: sending confirmation information confirming whether to cancel the outbound order to a customer and determining an outbound policy based on a feedback from the customer, if replenishment is unachievable or replenishment time exceeds set duration for the outbound order.

In some embodiments, the intelligent warehousing system may determine, based on a preset rule of receiving an email including specific text (for example, "out of stock") or a message including corresponding feedback information (for example, an application instant message based on a preset format) fed back by the upstream interface, that the upstream interface cannot perform replenishment.

In some embodiments, when an outbound order sets specific outbound time or duration for outbound, the intelligent warehousing system needs to satisfy the outbound time or duration when assigning the outbound task, to avoid overdue problems.

Correspondingly, when receiving second notification information, the intelligent warehousing system can determine a feedback from the customer for the confirmation information.

The second notification information is used for indicating selection result information determined by the customer based on the confirmation information sent by the intelligent warehousing system on whether to accept shipment of the order.

Specifically, when the upstream interface feeds back a message indicating that replenishment is unachievable or a message indicating that replenishment is unachievable within set duration, it indicates that the process of performing outbound on the first materials corresponding to the replenishment order cannot be completed within the required time of the outbound order. Therefore, further communication with the customer is required, to determine whether the customer agrees to cancel the outbound order in a case that the outbound order cannot be completed. If the feedback from the upstream interface feedback is that the upstream interface is out of stock or needs temporary re-production, it indicates that replenishment is unachievable.

Therefore, there is a need to determine whether the customer can accept direct shipment based on all currently picked materials.

In some embodiments, when the feedback from the customer is direct shipment, it is determined that the outbound policy is to perform outbound processing on the outbound materials corresponding to the second supplementary task and the picked materials.

Specifically, when the feedback from the customer is direct shipment, reference may be made to the case in step S306 in which the outbound order supports partial picking and a minimum outbound quantity requirement is not set. In this case, it is only necessary to directly perform outbound processing on all the currently picked materials (including the picked materials and the materials corresponding to the second supplementary task).

In some embodiments, when the feedback from the customer is disagreement to shipment, it is determined that the outbound policy is to cancel the order and perform inbound processing on the picked materials corresponding to the order.

Specifically, if the customer does not agree to shipment, and replenishment cannot be completed within the required time of the current order, the order needs to be canceled, and inbound processing needs to be performed on all the picked materials by the warehousing robot, without waiting for the replenishment to be completed for shipment.

In some embodiments, to ensure outbound efficiency, although the customer does not agree to shipment, the intelligent warehousing system still performs, before receiving feedback that the customer does not agree to shipment, the second supplementary task based on the premise that the customer agrees to shipment.

In some embodiments, after the order is canceled, when the customer needs the materials corresponding to the outbound order, an outbound order may be re-issued, and corresponding outbound time may be adjusted. When the intelligent warehousing system determines that the upstream interface can complete replenishment within the outbound time, material outbound processing may be re-completed according to the new outbound order.

Step S312: performing material outbound processing based on the outbound policy.

Specifically, after determining the outbound policy, the intelligent warehousing system generates corresponding tasks that need to be performed by the workstation and the warehousing robot (and/or the upstream system). The workstation and the warehousing robot (and/or the upstream system) perform the corresponding tasks to complete material outbound processing.

In this embodiment, jointly according to conditions such as the inventory quantity of the first materials on which picking shortage occurs, whether the outbound order supports partial picking, the upstream interface can replenish the first materials on which picking shortage occurs, and whether the user allows direct outbound when replenishment is unachievable, the intelligent warehousing system determines the corresponding outbound policy and generates the corresponding tasks, thereby effectively ensuring that the outbound order can be processed efficiently in a timely manner in different situations, and further improving warehouse management efficiency.

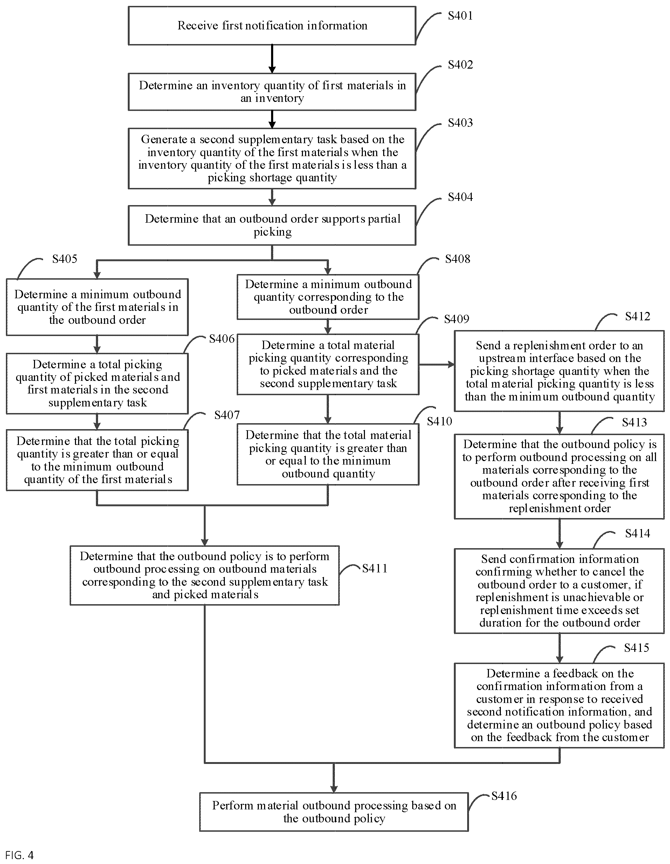

FIG. 4 is a flowchart of a material outbound method according to another embodiment of the present disclosure. As shown in FIG. 4, the material outbound method may include the following steps.

Step S401: receiving first notification information.

The first notification information is used for indicating that picking shortage occurs during outbound of first materials corresponding to an outbound order.

This step has the same content as step S201 in the embodiment of FIG. 2, and details are not described herein again.

Step S402: determining an inventory quantity of the first materials in an inventory.

This step has the same content as step S302 in the embodiment of FIG. 3, and details are not described herein again.

Step S403: generating a second supplementary task based on the inventory quantity of the first materials when the inventory quantity of the first materials is less than the picking shortage quantity.

This step has the same content as step S305 in the embodiment of FIG. 3, and details are not described herein again.

Step S404: determining that the outbound order supports partial picking.

This step has the same content as step S306 in the embodiment of FIG. 3, and details are not described herein again.

Step S405: determining a minimum outbound quantity corresponding to the outbound order.

In some embodiments, the outbound order includes a minimum outbound quantity requirement. For example, a factory raw material order includes a requirement that at least 50% raw materials are shipped; otherwise normal operation cannot be carried out.

Specifically, when the outbound order includes the minimum outbound quantity requirement, after picking shortage occurs on the first materials corresponding to the outbound order and the intelligent warehousing system reallocates the first materials in the inventory, whether a sum of the inventory quantity of the first materials and the material quantity of the picked materials after reallocation satisfies the minimum outbound quantity requirement needs to be first considered, to determine whether the outbound requirement of the customer can be satisfied, and then determine the outbound policy correspondingly.

Step S406: determining a total material picking quantity corresponding to the picked materials and the second supplementary task.

In some embodiments, the minimum outbound quantity of the outbound order is a requirement for the material quantity of all the materials. For example, when order materials are all M10 screws, the minimum outbound quantity may be a requirement that a total quantity of screws is greater than 80% of a required quantity in the order. Therefore, it is only necessary to consider a relationship between a sum (namely, the total material picking quantity) of the material quantity of the picked materials and the material quantity of the first materials corresponding to the second supplementary task and the minimum outbound quantity.

Step S407: determining that the total material picking quantity is greater than or equal to the minimum outbound quantity.

Specifically, if the total material picking quantity is greater than or equal to the minimum outbound quantity, the current picked materials and the first materials corresponding to the second supplementary task have met the requirements of the outbound order. In this case, outbound may be directly performed on this portion of materials.

Step S408: determining a minimum outbound quantity of the first materials in the outbound order.

In some embodiments, the minimum outbound quantity of the outbound order includes a specific requirement for materials of each category. For example, at least 10 materials A and at least 20 materials B are respectively required for outbound. In this case, whether a total picking quantity (where the total picking quantity is the sum of the picked material quantity of the first materials and the material quantity of the first materials corresponding to the second supplementary task) after completion of the second supplementary task for the first materials on which picking shortage occurs is greater than the minimum outbound quantity (where a minimum outbound quantity does not need to be considered for other materials because picking shortage does not occur on the other materials) needs to be considered.

Step S409: determining a total picking quantity of the picked materials and first materials in the second supplementary task.

Specifically, when there are at least two categories of first materials (that is, picking shortage occurs on at least two categories of materials in the same order), it is necessary to respectively calculate picked materials for each category of first materials and a corresponding total picking quantity in the second supplementary task.

Step S410: determining that the total picking quantity is greater than or equal to the minimum outbound quantity of the first materials.

Specifically, when the total picking quantity of the first materials is greater than or equal to the minimum outbound quantity of the first materials, requirements of the outbound order can also be satisfied. In this case, outbound may be directly performed on the picked materials and the first materials corresponding to the second supplementary task.

Further, step S408 to step S410 are options in parallel with step S405 to step S407, and the corresponding steps are selected and performed according to a specific configuration parameter of the minimum outbound quantity in the order.

Step S411: determining that the outbound policy is to perform outbound processing on outbound materials corresponding to the second supplementary task and the picked materials.

The picked materials are materials corresponding to the outbound order except the picking shortage quantity corresponding to the first materials.

In some embodiments, after the workstation performs outbound processing on the first materials corresponding to the second supplementary task and the picked materials, the intelligent warehousing system may further send a replenishment order to the upstream interface to complete outbound processing of the remaining portion of materials on which outbound has not been performed in the outbound order.

Step S412: sending a replenishment order to an upstream interface based on the picking shortage quantity when the total material picking quantity is less than the minimum outbound quantity.

Specifically, when the total material picking quantity is insufficient to satisfy the minimum outbound quantity, to complete the order, the replenishment order needs to be sent to the upstream interface; and after the replenished first materials are received, a corresponding outbound task is generated and then outbound is performed.

Step S413: determining that the outbound policy is to perform outbound processing on all materials corresponding to the outbound order after receiving first materials corresponding to the replenishment order.

This step has the same content as step S310 in the embodiment of FIG. 3, and details are not described herein again.

Step S414: sending confirmation information confirming whether to cancel the outbound order to a customer, if replenishment is unachievable or replenishment time exceeds set duration for the outbound order.

This step has the same content as step S311 in the embodiment of FIG. 3, and details are not described herein again.

Step S415: determining feedback on the confirmation information from a customer in response to received second notification information, and determining an outbound policy based on the feedback from the customer.

The second notification information is used for indicating selection information determined by the customer based on the confirmation information on whether to accept shipment of the order.

Specifically, when the feedback from the customer is direct shipment, it is determined that the outbound policy is to perform outbound processing on the outbound materials corresponding to the second supplementary task and the picked materials.

When the feedback from the customer is disagreement to shipment, it is determined that the outbound policy is to cancel the order and perform inbound processing on the picked materials corresponding to the order and the first materials corresponding to the second supplementary task.

Step S416: performing material outbound processing based on the outbound policy.

This step has the same content as step S203 in the embodiment of FIG. 2, and details are not described herein again.

In this embodiment, in a case that the inventory quantity of the first materials on which picking shortage occurs is less than the picking shortage quantity, and the outbound order supports partial picking, jointly considering conditions such as the minimum outbound quantity set for the order, whether the upstream system can replenish the first materials on which picking shortage occurs, and whether the user allows direct outbound when replenishment is unachievable, the intelligent warehousing system determines the corresponding outbound policy and generates the corresponding tasks, thereby effectively ensuring that the outbound order can be processed efficiently in a timely manner in different situations, and further improving warehouse management efficiency.

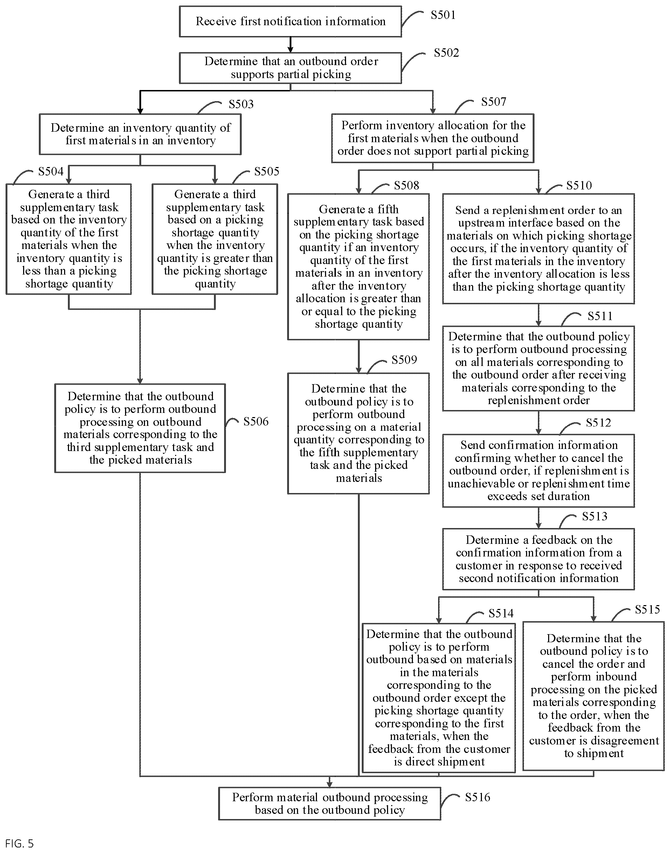

FIG. 5 is a flowchart of a material outbound method according to another embodiment of the present disclosure. As shown in FIG. 5, the material outbound method may include the following steps.

Step S501: receiving first notification information.

The first notification information is used for indicating that picking shortage occurs during outbound of first materials corresponding to an outbound order.

This step has the same content as step S201 in the embodiment of FIG. 2, and details are not described herein again.

Step S502: determining that the outbound order supports partial picking.

In some embodiments, the intelligent warehousing system first determines whether the outbound order supports partial picking before reallocating the inventory, to determine, according to the material quantity of the first materials requiring supplementary outbound, the material quantity of the first materials that need to be hit and for which a transport task needs to be generated after the reallocation of the inventory.

For example, if the outbound order does not support partial picking, it needs to be determined whether the material quantity of the first materials in the inventory is greater than the picking shortage quantity. If the inventory quantity of the first materials is less than the picking shortage quantity, it can be directly determined that the order cannot be directly completed, and the operation of hitting the corresponding first materials is stopped, without the need to determine whether the order can be directly completed after the inventory allocation and the hitting of the first materials in the inventory. In this way, efficiency of warehousing processing can be improved. Correspondingly, only when the outbound order supports partial picking, the intelligent warehousing system needs to further hit the first materials in the inventory after determining the material quantity in the inventory, to complete the outbound for the order.

Step S503: determining an inventory quantity of the first materials in an inventory.

Specifically, based on a record in the intelligent warehousing system, the intelligent warehousing system can determine the inventory quantity of the first materials in the inventory. In this case, the corresponding first materials do not need to be hit, and only the quantity needs to be determined for further determination.

Step S504: generating a third supplementary task based on the inventory quantity of the first materials when the inventory quantity is less than the picking shortage quantity.

In some embodiments, when the minimum outbound quantity is not preset for the outbound order, the intelligent warehousing system only needs to determine the material quantity of the first materials for supplementary outbound according to a relationship between the inventory quantity of the first materials and the picking shortage quantity.

Specifically, when the intelligent warehousing system determines that the recorded inventory quantity of the first materials is less than the picking shortage quantity, all the first materials in the inventory need to be hit through inventory allocation, and the third supplementary task needs to be generated.

For example, when picking shortage occurs on an outbound order with ten materials A being short, and the intelligent warehousing system finds that there are five materials A in the inventory, all five materials A need to be hit to generate the third supplementary task.

Step S505: generating a third supplementary task based on the picking shortage quantity when the inventory quantity is greater than the picking shortage quantity.

Specifically, upon determining to generate the third supplementary task according to the picking shortage quantity, the intelligent warehousing system hits the first materials of the picking shortage quantity in the inventory to generate the third supplementary task.

For example, when picking shortage occurs on an outbound order with ten materials A being short, and the intelligent warehousing system finds that there are 50 materials A in the inventory, only ten of the 50 materials A need to be hit and used as materials A for the third supplementary task.

Step S506: determining that the outbound policy is to perform outbound processing on outbound materials corresponding to the third supplementary task and the picked materials.

Specifically, after the third supplementary task is completed, the intelligent warehousing system sends an outbound task to the workstation, to perform outbound processing on both the first materials picked according to the third supplementary task and the other picked materials. In this way, when the outbound order supports partial picking, outbound is performed on the materials allowing direct outbound in the inventory, to satisfying customer needs in a timely manner.

Similarly, after performing outbound processing on the first materials corresponding to the third supplementary task and the picked materials, the intelligent warehousing system further needs to send a replenishment request to the upstream interface, to perform supplementary outbound on the materials on which outbound has not been performed in the outbound order after receiving the replenished first materials.

Step S507: performing inventory allocation for the first materials when the outbound order does not support partial picking.

Specifically, when the outbound order does not support partial picking, the inventory quantity of the first materials in the inventory needs to be determined first, to determine whether the material quantity demand of the order can be satisfied. If the inventory quantity is greater than the picking shortage quantity, the corresponding materials can be hit through inventory allocation, and a supplementary task corresponding to the picking shortage quantity can be generated directly. If the inventory quantity is less than the picking shortage quantity, a replenishment request needs to be sent to the upstream interface.

Further, the intelligent warehousing system determines, according to the inventory quantity and the picking shortage quantity, whether to generate a corresponding supplementary task. This is because when the inventory quantity is insufficient, replenishment by the upstream interface may be waited directly, without the need to re-generate supplementary task based on the picking shortage quantity. This is because when the inventory quantity is insufficient, whether the supplementary task is generated based on the inventory quantity, the outbound order needs to be shipped only after receiving materials replenished by the upstream interface. In this case, if replenishment by the upstream interface is waited directly, the first materials in the inventory may be reserved for other orders to hit, thereby improving material utilization efficiency and order processing efficiency.

Step S508: generating a fifth supplementary task based on the picking shortage quantity if an inventory quantity of the first materials in an inventory after the inventory allocation is greater than or equal to the picking shortage quantity.

Specifically, when the inventory quantity is sufficient, the intelligent warehousing system may hit the first materials corresponding to the picking shortage quantity and directly generate a fifth supplementary task corresponding to the picking shortage quantity, to complete outbound of the first materials corresponding to the outbound order as soon as possible.

Step S509: determining that the outbound policy is to perform outbound processing on a material quantity corresponding to the fifth supplementary task and the picked materials.

Specifically, after the fifth supplementary task is completed, the intelligent warehousing system may directly send a task of performing outbound processing on all the materials corresponding to the outbound order to the workstation, to complete the material outbound processing.

Step S510: sending a replenishment order to an upstream interface based on the materials on which picking shortage occurs, if the inventory quantity of the first materials in the inventory after the inventory allocation is less than the picking shortage quantity.

In some embodiments, when the inventory quantity is insufficient, the intelligent warehousing system does not hit the first materials in the inventory alone, but sends a replenishment order including all the first materials of the picking shortage quantity directly to the upstream interface.

For example, picking shortage occurs on an outbound order with 20 packs of dust materials being short, the outbound order does not support partial picking, but there are only 15 packs of the material in the inventory. In this case, the intelligent warehousing system may directly send a replenishment order for replenishment of 20 packs of the material to the upstream interface, instead of replenishment of five packs. Further, the 15 packs of dust materials in the inventory may accept hitting and outbound tasks for subsequent orders.

Step S511: determining that the outbound policy is to perform outbound processing on all materials corresponding to the outbound order after receiving materials corresponding to the replenishment order.

After receiving and performing inbound on the materials corresponding to the replenishment order, the intelligent warehousing system generates a transport task directly based on the first materials corresponding to the replenishment order and the picking shortage quantity. The materials are transported by the warehousing robot to a workstation for picking. After the picking is completed, outbound processing is performed on the materials together with the picked materials.

Step S512: sending confirmation information confirming whether to cancel the outbound order, if replenishment is unachievable or replenishment time exceeds set duration.

Step S513: determining feedback on the confirmation information from a customer in response to received second notification information.

The second notification information is used for indicating a selection made by the customer based on the confirmation information on whether to accept shipment of the order.

Step S514: determining that the outbound policy is to perform outbound based on materials in the materials corresponding to the outbound order except the picking shortage quantity corresponding to the first materials, when the feedback from the customer is direct shipment.

Step S515: determining that the outbound policy is to cancel the order and perform inbound processing on the picked materials corresponding to the order, when the feedback from the customer is disagreement to shipment.

Step S512 to step S515 have the same content as step S311 in the embodiment of FIG. 3, and details are not described herein again.

Step S516: performing material outbound processing based on the outbound policy.

This step has the same content as step S203 in the embodiment of FIG. 2, and details are not described herein again.

In this embodiment, the intelligent warehousing system first determines whether the outbound order supports partial picking, and then determines, according to the inventory quantity of the first materials on which picking shortage occurs, whether a supplementary outbound task needs to be generated, or directly apply replenishment to the upstream interface, thereby directly waiting for replenishment by the upstream interface in case of insufficient inventory, and improving utilization efficiency of the materials in the inventory.

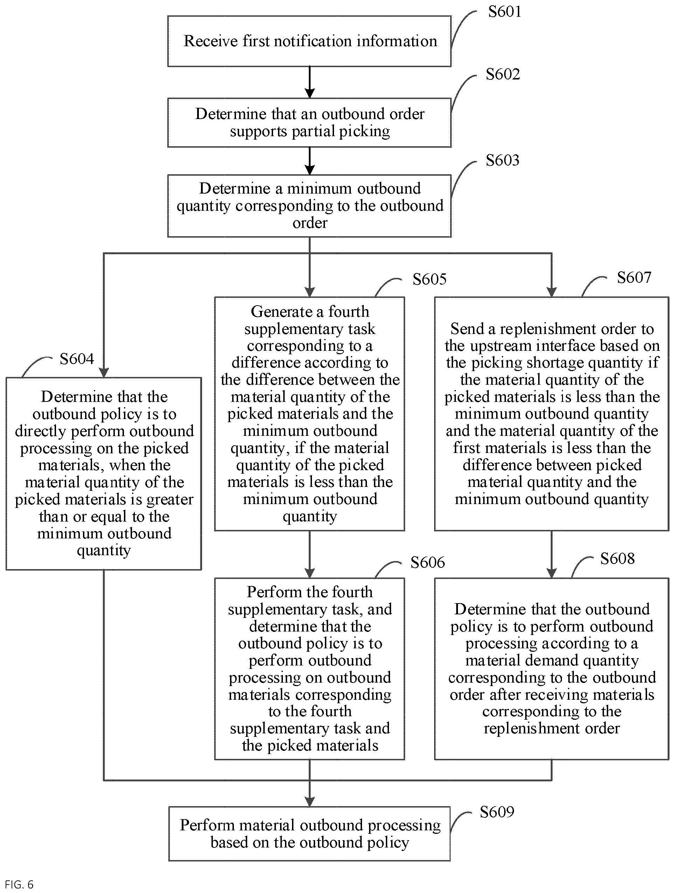

FIG. 6 is a flowchart of a material outbound method according to another embodiment of the present disclosure. As shown in FIG. 6, the material outbound method may include the following steps.

Step S601: receiving first notification information.

The first notification information is used for indicating that picking shortage occurs during outbound of first materials corresponding to an outbound order.

This step has the same content as step S201 in the embodiment of FIG. 2, and details are not described herein again.

Step S602: determining that the outbound order supports partial picking.

This embodiment differs from the embodiment shown in FIG. 4 in that, in this embodiment, the intelligent warehousing system first determines that the outbound order supports partial picking, and then determines whether inventory picking is required according to the minimum outbound quantity, to determine the outbound policy. Therefore, similar to the embodiment shown in FIG. 5, in this embodiment, when the inventory quantity is insufficient, generation of the supplementary task may be skipped, and the replenishment order is sent directly to the upstream interface, so that the first materials in the inventory may be hit by other orders, thereby improving the utilization efficiency of the materials in the inventory.

Step S603: determining a minimum outbound quantity corresponding to the outbound order.

This step has the same content as step S405 in the embodiment of FIG. 4, and details are not described herein again.

Step S604: determining that the outbound policy is to directly perform outbound processing on the picked materials, when the material quantity of the picked materials is greater than or equal to the minimum outbound quantity.

Specifically, when the material quantity of the picked materials satisfies the minimum outbound quantity requirement, outbound processing is directly performed on the picked materials with reference to the content of step S407, step S410, and step S411 in the embodiment shown in FIG. 4.

Step S605: generating a fourth supplementary task corresponding to a difference according to the difference between the material quantity of the picked materials and the minimum outbound quantity, if the material quantity of the picked materials is less than the minimum outbound quantity.

The fourth supplementary task is a task of reselecting first materials through inventory allocation for outbound.

Specifically, the intelligent warehousing system may generate the fourth supplementary task directly based on the first materials in the inventory when the material quantity of the picked materials is insufficient. When only the minimum outbound quantity needs to be satisfied to implement outbound, and the inventory quantity is less than the picking shortage quantity, the intelligent warehousing system may generate the fourth supplementary task directly according to the difference between the picked materials and the minimum outbound quantity.

Step S606: performing the fourth supplementary task, and determining that the outbound policy is to perform outbound processing on outbound materials corresponding to the fourth supplementary task and the picked materials.

Specifically, performing the fourth supplementary task includes: The intelligent warehousing system hits the first materials corresponding to the fourth supplementary task, sends a transport task of transporting the hit first materials to the warehousing robot, sends a picking task of picking the first materials to the workstation, and waits for feedback messages indicating completion from the warehousing robot and the workstation.

Step S607: sending a replenishment order to the upstream interface based on the picking shortage quantity if the material quantity of the picked materials is less than the minimum outbound quantity and the inventory quantity of the first materials is less than the difference between picked material quantity and the minimum outbound quantity.

Specifically, when the sum of the material quantity of the first materials in the inventory and the picked material quantity is insufficient to satisfy the minimum inventory quantity requirement, the replenishment order is sent directly to the upstream interface without the need to re-generate a supplementary task.

Step S608: determining that the outbound policy is to perform outbound processing according to a material demand quantity corresponding to the outbound order after receiving materials corresponding to the replenishment order.

This step has the same content as step S311 in the embodiment of FIG. 3, and details are not described herein again.

Step S609: performing material outbound processing based on the outbound policy.

This step has the same content as step S312 in the embodiment of FIG. 3, and details are not described herein again.

In this embodiment, on the premise that the outbound order supports partial picking, the intelligent warehousing system determines, according to that the inventory quantity of the first materials on which picking shortage occurs can satisfy the minimum outbound quantity requirement, whether a supplementary outbound task needs to be generated, or directly apply replenishment to the upstream interface, thereby directly waiting for replenishment by the upstream interface in case of insufficient inventory, and improving utilization efficiency of the materials in the inventory.

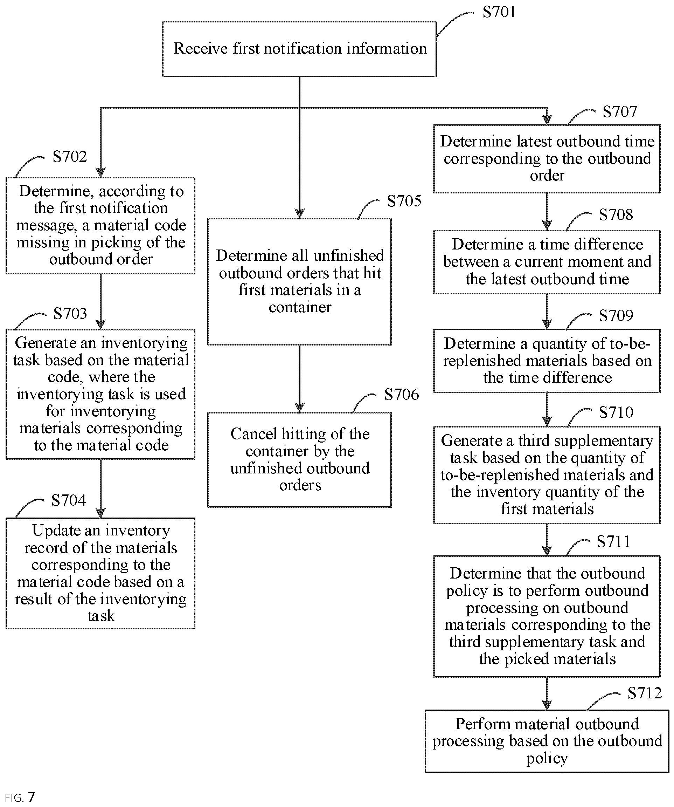

FIG. 7 is a flowchart of a material outbound method according to another embodiment of the present disclosure. As shown in FIG. 7, the material outbound method may include the following steps.

Step S701: receiving first notification information.

The first notification information is used for indicating that picking shortage occurs during outbound of first materials corresponding to an outbound order.

This step has the same content as step S201 in the embodiment of FIG. 2, and details are not described herein again.

Step S702: determining, according to the first notification message, a material code missing in picking of the outbound order.

Specifically, after picking shortage occurs, the intelligent warehousing system needs to first determine specific material information of the first materials on which picking shortage occurs, for example, information such as a material category, a container in which the materials are located, and inbound time for the materials. Such information can be determined by querying the material code.

Step S703: generating an inventorying task based on the material code, where the inventorying task is used for inventorying materials corresponding to the material code.

Specifically, after picking shortage occurs, there is a material shortage in at least one container. Therefore, the first materials in the inventory needs to be inventoried to avoid that the first materials on which picking shortage occurs are mistakenly placed at a location not recorded by the intelligent warehousing system. For example, if screws that should have been in a container M011 are placed in a container M012, an inventorying task is required to find the mistakenly placed screws.

Further, material shortages in other containers can further be found in time by performing the inventorying task, to reduce occurrence of picking shortage.

Step S704: updating an inventory record of the materials corresponding to the material code based on a result of the inventorying task.

Specifically, after the inventorying task is completed, the inventory record in the intelligent warehousing system needs to be updated to avoid re-occurrence of picking shortage.

Step S705: determining all unfinished outbound orders that hit first materials in a container.

Specifically, when picking shortage occurs, the first materials on which picking shortage occurs and the container in which the first materials are located may be hit by a plurality of outbound orders. For example, an outbound order A and an outbound order B both hit screws in a container M01 one after the other, the container M01 has not been picked for the outbound order B, and it is found that picking shortage occurs on the screws in the container M01 during picking for the outbound order A. In this case, hitting of the container M01 by the outbound order B needs to be canceled in time to avoid repeated occurrence of picking shortage.

Step S706: canceling hitting of the container by the unfinished outbound orders.

Specifically, hitting of the container by the unfinished outbound orders on which picking shortage occurs is canceled, thereby preventing other outbound orders from facing picking shortage during subsequent picking. This is because when picking shortage occurs, it indicates that materials in the hit container for outbound are insufficient to complete the current outbound order, and subsequent outbound orders hitting the container certainly have no access to the corresponding materials for outbound, and therefore also face picking shortage.

Step S707: determining latest outbound time corresponding to the outbound order.

Specifically, after it is determined that picking shortage occurs, if the latest outbound time is set for the outbound order, the outbound policy further needs to be determined based on the latest outbound time.

Step S708: determining a time difference between a current moment and the latest outbound time.

Specifically, if the time difference between the latest outbound time and the current moment is short, for example, raw materials corresponding to an outbound order are urgently needed on a production line of a process industry, a time difference between a current moment and latest outbound time needs to be calculated in real time.

Step S709: determining a quantity of to-be-replenished materials based on the time difference.

The quantity of to-be-replenished materials is less than or equal to the picking shortage quantity of the first materials.

Specifically, a supplementary task that can be completed by the warehousing system in time and the corresponding quantity of to-be-replenished materials are determined according to the time difference. If there is sufficient time, the quantity of to-be-replenished materials may be determined according to the inventory quantity of the first materials and the picking shortage quantity of the first materials; and if there is no sufficient time to complete the supplementary task with the whole picking shortage quantity, the quantity of to-be-replenished materials may be determined according to the inventory quantity, and time for receiving replenished materials from the upstream interface and a replenishment quantity.

Step S710: generating a third supplementary task based on the quantity of to-be-replenished materials and the inventory quantity of the first materials.

The quantity of to-be-replenished materials is determined in combination with the inventory quantity of the first materials and the time difference. After the quantity of to-be-replenished materials is determined, a specific supplementary task is determined according to whether replenishment from the upstream interface is required.

Step 711: determining that the outbound policy is to perform outbound processing on outbound materials corresponding to the third supplementary task and the picked materials.

This step has the same content as step S506 in the embodiment of FIG. 5, and details are not described herein again.

Step S712: performing material outbound processing based on the outbound policy.

To ensure that outbound can be performed before the latest outbound time, outbound processing needs to be performed on the materials in a timely manner according to the outbound policy.

In this embodiment, after picking shortage occurs, the intelligent warehousing system performs inventorying and cancels hitting of the container on which picking shortage occurs by other orders, determines the outbound policy based on the latest outbound time, and completes the outbound, thereby avoiding affecting processing of subsequent orders after picking shortage occurs on the current order, ensuring that the current order can be completed on time, and further ensuring warehouse management efficiency.

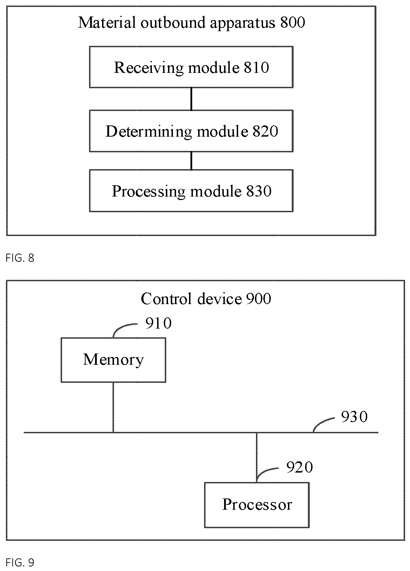

FIG. 8 is a schematic structural diagram of a material outbound apparatus according to an embodiment of the present disclosure. As shown in FIG. 8, the material outbound apparatus 800 includes: a receiving module 810, a determining module 820, and a processing module 830.

The receiving module 810 is configured to receive first notification information, where the first notification information is used for indicating that picking shortage occurs during outbound of first materials corresponding to an outbound order.

The determining module 820 is configured to determine an outbound policy for the outbound order according to a picking shortage quantity of the first materials in the first notification information.

The processing module 830 is configured to perform material outbound processing based on the outbound policy.

Optionally, the determining module 820 is further configured to: determine an inventory quantity of the first materials in an inventory; determine the outbound policy based on the picking shortage quantity if the inventory quantity of the first materials is greater than the picking shortage quantity; and determine the outbound policy for the outbound order depending on whether the outbound order supports partial picking, if the inventory quantity of the first materials is less than the picking shortage quantity.

Optionally, the determining module 820 is further configured to: if the inventory quantity of the first materials is greater than the picking shortage quantity, generate a first supplementary task based on the picking shortage quantity; and determine that the outbound policy is to perform outbound processing on all materials corresponding to the outbound order, when the first supplementary task and an outbound picking task for the outbound order except the picking shortage quantity corresponding to the first materials are completed.

Optionally, the determining module 820 is further configured to: if the inventory quantity of the first materials is less than the picking shortage quantity, generate a second supplementary task based on the inventory quantity of the first materials; determine that the outbound order supports partial picking; and determine that the outbound policy is to perform outbound processing on outbound materials corresponding to the second supplementary task and picked materials, where the picked materials are materials corresponding to the outbound order except the picking shortage quantity corresponding to the first materials.

Optionally, the determining module 820 is further configured to: before determining that the outbound policy is to perform outbound processing on the outbound materials corresponding to the second supplementary task and the picked materials, determine a minimum outbound quantity corresponding to the outbound order; determine a total material picking quantity corresponding to the picked materials and the second supplementary task; and determine that the total material picking quantity is greater than or equal to the minimum outbound quantity.

Optionally, the determining module 820 is further configured to: before determining that the outbound policy is to perform outbound processing on the outbound materials corresponding to the second supplementary task and the picked materials, determine a minimum outbound quantity of the first materials in the outbound order; determine a total picking quantity of the picked materials and first materials in the second supplementary task; and determine that the total picking quantity is greater than or equal to the minimum outbound quantity of the first materials.

Optionally, the determining module 820 is further configured to: after determining the total material picking quantity corresponding to the picked materials and the second supplementary task, send a replenishment order to an upstream interface based on the picking shortage quantity when the total material picking quantity is less than the minimum outbound quantity; and determine that the outbound policy is to perform outbound processing on all materials corresponding to the outbound order after receiving first materials corresponding to the replenishment order.

Optionally, the determining module 820 is further configured to: if the inventory quantity of the first materials is less than the picking shortage quantity, generate a second supplementary task based on the inventory quantity of the first materials; determine that the outbound order does not support partial picking; send a replenishment order to an upstream interface based on the picking shortage quantity; and determine that the outbound policy is to perform outbound processing on all materials corresponding to the outbound order after receiving first materials corresponding to the replenishment order.

Optionally, the determining module 820 is further configured to: send confirmation information confirming whether to cancel the outbound order to a customer, if replenishment is unachievable or replenishment time exceeds set duration for the outbound order.

Optionally, the determining module 820 is further configured to: after sending the confirmation information confirming whether to cancel the outbound order, determine feedback on the confirmation information from the customer in response to received second notification information, where the second notification information is used for indicating a selection made by the customer based on the confirmation information on whether to accept shipment of the order; determine that the outbound policy is to perform outbound processing on outbound materials corresponding to the second supplementary task and the picked materials, when the feedback from the customer is direct shipment; and determine that the outbound policy is to cancel the order and perform inbound processing on the picked materials corresponding to the order, when the feedback from the customer is disagreement to shipment.

Optionally, the determining module 820 is further configured to: determine that the outbound order supports partial picking; and determine the outbound policy according to an inventory quantity of the first materials and picked materials, where the picked materials are materials corresponding to the outbound order except the picking shortage quantity corresponding to the first materials.

Optionally, the determining module 820 is further configured to: determine the inventory quantity of the first materials in the inventory; generate a third supplementary task based on the inventory quantity of the first materials when the inventory quantity is less than the picking shortage quantity; or generate a third supplementary task based on the picking shortage quantity when the inventory quantity is greater than the picking shortage quantity; and determine that the outbound policy is to perform outbound processing on outbound materials corresponding to the third supplementary task and the picked materials.

Optionally, the determining module 820 is further configured to: determine latest outbound time corresponding to the outbound order; determine a time difference between a current moment and the latest outbound time; determine a quantity of to-be-replenished materials based on the time difference, where the quantity of to-be-replenished materials is less than or equal to the picking shortage quantity of the first materials; generate a third supplementary task based on the quantity of to-be-replenished materials and the inventory quantity of the first materials; and determine that the outbound policy is to perform outbound processing on outbound materials corresponding to the third supplementary task and the picked materials.

Optionally, the determining module 820 is further configured to: before determining the outbound policy according to the inventory quantity of the first materials and the picked materials, determine a minimum outbound quantity corresponding to the outbound order; and determine that a material quantity of the picked materials is greater than or equal to the minimum outbound quantity.

Optionally, the determining module 820 is further configured to: generate a fourth supplementary task corresponding to a difference according to the difference between the material quantity of the picked materials and the minimum outbound quantity, if the material quantity of the picked materials is less than the minimum outbound quantity, where the fourth supplementary task is a task of reselecting first materials through inventory allocation for outbound; and performing the fourth supplementary task.

Optionally, the determining module 820 is further configured to: if an inventory quantity of the first materials after the inventory allocation is less than the difference between the picked material quantity and the minimum outbound quantity, send a replenishment order to an upstream interface based on the picking shortage quantity, and determine that the outbound policy is to perform outbound processing according to a material demand quantity corresponding to the outbound order after receiving materials corresponding to the replenishment order.

Optionally, the determining module 820 is further configured to: perform inventory allocation for the first materials when the outbound order does not support partial picking; generate a fifth supplementary task based on the picking shortage quantity if an inventory quantity of the first materials in the inventory after the inventory allocation is greater than or equal to the picking shortage quantity; and determine that the outbound policy is to perform outbound processing on a material quantity corresponding to the fifth supplementary task and the picked materials.

Optionally, the determining module 820 is further configured to: after performing inventory allocation for the first materials, send a replenishment order to an upstream interface based on the materials on which picking shortage occurs, if the inventory quantity of the first materials in the inventory after the inventory allocation is less than the picking shortage quantity; and determine that the outbound policy is to perform outbound processing on all materials corresponding to the outbound order after receiving materials corresponding to the replenishment order.

Optionally, the determining module 820 is further configured to: send confirmation information confirming whether to cancel the outbound order, if replenishment is unachievable or replenishment time exceeds set duration.

Optionally, the determining module 820 is further configured to: after the sending the confirmation information confirming whether to cancel the outbound order, determine feedback on the confirmation information from a customer in response to received second notification information, where the second notification information is used for indicating a selection made by the customer based on the confirmation information on whether to accept shipment of the order; determine that the outbound policy is to perform outbound based on materials in the materials corresponding to the outbound order except the picking shortage quantity corresponding to the first materials, when the feedback from the customer is direct shipment; and determine that the outbound policy is to cancel the order and perform inbound processing on the picked materials corresponding to the order, when the feedback from the customer is disagreement to shipment.

Optionally, the determining module 820 is further configured to: after receiving first notification information, determine, according to the first notification message, a material code missing in picking of the outbound order; generate an inventorying task based on the material code, where the inventorying task is used for inventorying materials corresponding to the material code; and update an inventory record of the materials corresponding to the material code based on a result of the inventorying task.

In this embodiment, through combination of the modules of the material outbound apparatus, the corresponding outbound policy can be determined in a targeted manner based on the specific situation of picking shortage, to ensure that material outbound can still be implemented even when picking shortage occurs, thereby effectively avoiding the problem that the order cannot be completed when picking shortage occurs, improving warehouse management efficiency.

FIG. 9 is a schematic structural diagram of a control device according to another embodiment of the present disclosure. As shown in FIG. 9, the control device 900 includes a memory 910 and a processor 920.

The memory 910 stores a computer program executable by the at least one processor 920. The computer program is executed by the at least one processor 920 to cause the control device to implement the material outbound method provided in any of the embodiments above.

The memory 910 and the processor 920 may be connected by a bus 930.

Relevant description can be understood with respect to the relevant description and effects corresponding to the method embodiments, and details are not described herein again

An embodiment of the present disclosure provides a computer-readable storage medium on which a computer program is stored. The computer program is executed by a processor to implement the material outbound method provided in any of the method embodiments above.

The computer-readable storage medium may be a ROM, a random access memory (RAM), a CD-ROM, a tape, a floppy disk, an optical data storage device, or the like.

An embodiment of the present disclosure provides a computer program product, including computer executable instructions, where the computer executable instructions, when executed by a processor, are configured for performing the material outbound method according to the foregoing method embodiments.

In the several embodiments provided in the present disclosure, it should be understood that the disclosed apparatus and method may be implemented in other manners. For example, the described apparatus embodiment is merely exemplary. For example, the module division is merely a logical function division and may be other division during actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electric, mechanical, or other forms.

A person skilled in the art can easily figure out other implementation solutions of the present disclosure after considering the specification and practicing this application that is disclosed herein. The present disclosure is intended to cover any variation, use, or adaptive change of the present disclosure. These variations, uses, or adaptive changes follow the general principles of the present disclosure and include common general knowledge or common technical means in the art that are not disclosed in the present disclosure. The specification and the embodiments are considered as exemplary only, and a true scope and spirit of the present disclosure are indicated by the following claims.

It should be understood that the present disclosure is not limited to the precise structures described above and shown in the accompanying drawings, and various modifications and changes can be made without departing from the scope of the present disclosure. The scope of the present disclosure is limited only by the appended claims.

## Claims

1. A material outbound method, applied to an intelligent warehousing system, the material outbound method comprising:
receiving first notification information, wherein the first notification information is used for indicating that picking shortage occurs during outbound of first materials corresponding to an outbound order;
determining an outbound policy for the outbound order according to a picking shortage quantity of the first materials in the first notification information; and
performing material outbound processing based on the outbound policy.

2. The material outbound method according to claim 1, wherein the determining the outbound policy for the outbound order according to the picking shortage quantity of the first materials in the first notification information comprises:
determining an inventory quantity of the first materials in an inventory;
determining the outbound policy based on the picking shortage quantity if the inventory quantity of the first materials is greater than the picking shortage quantity; and
determining the outbound policy for the outbound order depending on whether the outbound order supports partial picking, if the inventory quantity of the first materials is less than the picking shortage quantity.

3. The material outbound method according to claim 2, wherein the determining the outbound policy based on the picking shortage quantity if the inventory quantity of the first materials is greater than the picking shortage quantity comprises:
generating a first supplementary task based on the picking shortage quantity; and
determining that the outbound policy is to perform outbound processing on all materials corresponding to the outbound order, when the first supplementary task and an outbound picking task for the outbound order except the picking shortage quantity corresponding to the first materials are completed.

4. The material outbound method according to claim 2, wherein the determining the outbound policy for the outbound order depending on whether the outbound order supports partial picking, if the inventory quantity of the first materials is less than the picking shortage quantity comprises:
generating a second supplementary task based on the inventory quantity of the first materials;
determining that the outbound order supports partial picking; and
determining that the outbound policy is to perform outbound processing on outbound materials corresponding to the second supplementary task and picked materials, wherein the picked materials are materials corresponding to the outbound order except the picking shortage quantity corresponding to the first materials.

5. The material outbound method according to claim 4, wherein before the determining that the outbound policy is to perform outbound processing on the outbound materials corresponding to the second supplementary task and the picked materials, the method further comprises:
determining a minimum outbound quantity corresponding to the outbound order;
determining a total material picking quantity corresponding to the picked materials and the second supplementary task; and
determining that the total material picking quantity is greater than or equal to the minimum outbound quantity.

6. The material outbound method according to claim 4, wherein before the determining that the outbound policy is to perform outbound processing on the outbound materials corresponding to the second supplementary task and the picked materials, the method further comprises:
determining a minimum outbound quantity of the first materials in the outbound order;
determining a total picking quantity of the picked materials and first materials in the second supplementary task; and
determining that the total picking quantity is greater than or equal to the minimum outbound quantity of the first materials.

7. The material outbound method according to claim 5, wherein after the determining the total material picking quantity corresponding to the picked materials and the second supplementary task, the method further comprises:
sending a replenishment order to an upstream interface based on the picking shortage quantity when the total material picking quantity is less than the minimum outbound quantity; and
determining that the outbound policy is to perform outbound processing on all materials corresponding to the outbound order after receiving first materials corresponding to the replenishment order.

8. The material outbound method according to claim 2, wherein the determining the outbound policy for the outbound order depending on whether the outbound order supports partial picking, if the inventory quantity of the first materials is less than the picking shortage quantity comprises:
generating a second supplementary task based on the inventory quantity of the first materials;
determining that the outbound order does not support partial picking;
sending a replenishment order to an upstream interface based on the picking shortage quantity; and
determining that the outbound policy is to perform outbound processing on all materials corresponding to the outbound order after receiving first materials corresponding to the replenishment order.

9. The material outbound method according to claim 7 or 8, further comprising:
sending confirmation information confirming whether to cancel the outbound order to a customer, if replenishment is unachievable or replenishment time exceeds set duration for the outbound order.

10. The material outbound method according to claim 9, wherein after the sending the confirmation information confirming whether to cancel the outbound order, the method further comprises:
determining feedback on the confirmation information from the customer in response to received second notification information, wherein the second notification information is used for indicating a selection made by the customer based on the confirmation information on whether to accept shipment of the order;
determining that the outbound policy is to perform outbound processing on outbound materials corresponding to the second supplementary task and the picked materials, when the feedback from the customer is direct shipment; and
determining that the outbound policy is to cancel the order and perform inbound processing on the picked materials corresponding to the order, when the feedback from the customer is disagreement to shipment.

11. The material outbound method according to claim 1, wherein the determining the outbound policy for the outbound order according to the picking shortage quantity of the first materials in the first notification information comprises:
determining that the outbound order supports partial picking; and
determining the outbound policy according to an inventory quantity of the first materials and picked materials, wherein the picked materials are materials corresponding to the outbound order except the picking shortage quantity corresponding to the first materials.

12. The material outbound method according to claim 11, wherein the determining the outbound policy according to the inventory quantity and the picked materials comprises:
determining an inventory quantity of the first materials in an inventory;
generating a third supplementary task based on the inventory quantity of the first materials when the inventory quantity is less than the picking shortage quantity; or
generating a third supplementary task based on the picking shortage quantity when the inventory quantity is greater than the picking shortage quantity; and
determining that the outbound policy is to perform outbound processing on outbound materials corresponding to the third supplementary task and the picked materials.

13. The material outbound method according to claim 11, wherein the determining the outbound policy according to the inventory quantity of the first materials and the picked materials comprises:
determining latest outbound time corresponding to the outbound order;
determining a time difference between a current moment and the latest outbound time;
determining a quantity of to-be-replenished materials based on the time difference, wherein the quantity of to-be-replenished materials is less than or equal to the picking shortage quantity of the first materials;
generating a third supplementary task based on the quantity of to-be-replenished materials and the inventory quantity of the first materials; and
determining that the outbound policy is to perform outbound processing on outbound materials corresponding to the third supplementary task and the picked materials.

14. The material outbound method according to claim 11, wherein before the determining the outbound policy according to the inventory quantity of the first materials and the picked materials, the method further comprises:
determining a minimum outbound quantity corresponding to the outbound order; and
determining that a material quantity of the picked materials is greater than or equal to the minimum outbound quantity.

15. The material outbound method according to claim 14, further comprising:
generating a fourth supplementary task corresponding to a difference according to the difference between the material quantity of the picked materials and the minimum outbound quantity, if the material quantity of the picked materials is less than the minimum outbound quantity, wherein the fourth supplementary task is a task of reselecting first materials through inventory allocation for outbound; and
performing the fourth supplementary task.

16. The material outbound method according to claim 15, further comprising:
if an inventory quantity of the first materials after the inventory allocation is less than the difference between the picked material quantity and the minimum outbound quantity, sending a replenishment order to an upstream interface based on the picking shortage quantity, and determining that the outbound policy is to perform outbound processing according to a material demand quantity corresponding to the outbound order after receiving materials corresponding to the replenishment order.

17. The material outbound method according to claim 1, where the determining the outbound policy for the outbound order according to the picking shortage quantity of the first materials in the first notification information comprises:
performing inventory allocation for the first materials when the outbound order does not support partial picking;
generating a fifth supplementary task based on the picking shortage quantity if an inventory quantity of the first materials in an inventory after the inventory allocation is greater than or equal to the picking shortage quantity; and
determining that the outbound policy is to perform outbound processing on a material quantity corresponding to the fifth supplementary task and the picked materials.

18. The material outbound method according to claim 17, wherein after the performing inventory allocation for the first materials, the method further comprises:
sending a replenishment order to an upstream interface based on the materials on which picking shortage occurs, if the inventory quantity of the first materials in the inventory after the inventory allocation is less than the picking shortage quantity; and
determining that the outbound policy is to perform outbound processing on all materials corresponding to the outbound order after receiving materials corresponding to the replenishment order.

19. The material outbound method according to claim 18, further comprising:
sending confirmation information confirming whether to cancel the outbound order, if replenishment is unachievable or replenishment time exceeds set duration.

20. The material outbound method according to claim 19, wherein after the sending the confirmation information confirming whether to cancel the outbound order, the method further comprises:
determining feedback on the confirmation information from a customer in response to received second notification information, wherein the second notification information is used for indicating a selection made by the customer based on the confirmation information on whether to accept shipment of the order;
determining that the outbound policy is to perform outbound based on materials in the materials corresponding to the outbound order except the picking shortage quantity corresponding to the first materials, when the feedback from the customer is direct shipment; and
determining that the outbound policy is to cancel the order and perform inbound processing on the picked materials corresponding to the order, when the feedback from the customer is disagreement to shipment.

21. The material outbound method according to any one of claims 1 to 8, wherein after the receiving first notification information, the method further comprises:
determining, according to the first notification information, a material code missing in picking of the outbound order;
generating an inventorying task based on the material code, wherein the inventorying task is used for inventorying materials corresponding to the material code; and
updating an inventory record of the materials corresponding to the material code based on a result of the inventorying task.

22. The material outbound method according to any one of claims 1 to 8, wherein after the receiving first notification information, the method further comprises:
determining all unfinished outbound orders that hit first materials in a container; and
canceling hitting of the container by the unfinished outbound orders.

23. A material outbound apparatus, used in an intelligent warehousing system, the material outbound apparatus comprising:
a receiving module, configured to receive first notification information, wherein the first notification information is used for indicating that picking shortage occurs during outbound of first materials corresponding to an outbound order;
a determining module, configured to determine an outbound policy for the outbound order according to a picking shortage quantity of the first materials in the first notification information; and
a processing module, configured to perform material outbound processing based on the outbound policy.

24. A control device, comprising:
at least one processor; and
a memory communicatively connected to the at least one processor, wherein
the memory stores instructions executable by the at least one processor, and the instructions are executed by the at least one processor, to cause the control device to perform the material outbound method according to any one of claims 1 to 22.

25. A computer-readable storage medium, wherein the computer-readable storage medium stores computer executable instructions, and the computer executable instructions, when executed by a processor, are configured for performing the material outbound method according to any one of claims 1 to 22.

26. A computer program product, wherein the computer program product comprises computer executable instructions, and the computer executable instructions, when executed by a processor, are configured for performing the material outbound method according to any one of claims 1 to 22.
